# EUROPÄISCHE PATENTSCHRIFT

(11) **EP 1 763 546 B1**
(45) Veröffentlichungstag und Bekanntmachung des Hinweises auf die Patenterteilung: **31.03.2010**
(21) Anmeldenummer: 05755313.3
(22) Anmeldetag: 30.06.2005
(51) Int. Cl.: C08F 220/58

(54) **WASSERLÖSLICHE SULFOGRUPPENHALTIGE COPOLYMERE, VARFAHREN ZU DEREN HERSTELLUNG UND IHRE VERWENDUNG**
WATER-SOLUBLE COPOLYMERS CONTAINING SULFO GROUPS, METHOD FOR THE PRODUCTION AND USE THEREOF
COPOLYMERES SOLUBLES DANS L'EAU, CONTENANT DES GROUPE SULFO, PROCEDE POUR LES PREPARER, ET LEUR UTILISATION

(30) Priorität: 03.07.2004 DE 102004032304
(43) Veröffentlichungstag der Anmeldung: 21.03.2007
(73) Patentinhaber: Construction Research & Technology GmbH, 83308 Trostberg (DE)
(72) Erfinder: SCHINABECK, Michael, 83352 Altenmarkt (DE); FRIEDRICH, Stefan, 84518 Garching (DE); HOLLAND, Uwe, 77300 Fontainebleau (FR); PFEUFFER, Thomas, 83308 Trostberg (DE); EBERWEIN, Michael, 84518 Garching an der Alz (DE); SCHUHBECK, Thomas, 83308 Trostberg (DE)
(74) Vertreter: Böhm, Brigitte
(86) Internationale Anmeldenummer: PCT/EP2005/007089
(87) Internationale Veröffentlichungsnummer: WO 2006/002936

(56) Entgegenhaltungen:
- CH-A- 380 375
- DE-A1- 19 806 482
- FR-A- 2 108 635
- US-A- 5 087 646

## Beschreibung

Die vorliegende Erfindung betrifft wasserlösliche sulfogruppenhaltige Copolymere, Verfahren zur deren Herstellung und ihre Verwendung als Wasserretentionsmittel, Stabilisierer und Rheologiemodifizierer in wässrigen Baustoffsystemen auf der Basis hydraulischer Bindemittel wie Zement, Kalk, Gips, Anhydrit usw. sowie in wasserbasierenden Anstrich- und Beschichtungssystemen.

Es ist bekannt, dass der Zusatz von Additiven zu hydraulischen bzw. latent hydraulischen Bindemitteln wie bspw. Zement oder Gips die Eigenschaften des Baustoffs vorteilhaft verändert. So wird bspw. durch Zugabe eines Additivs aus der Gruppe der Fließmittel die Verarbeitbarkeit erleichtert, indem die Fließfähigkeit deutlich verbessert wird. Bei hochfließfähigen Mischungen ist jedoch die Tendenz zur Segregation schwererer Bestandteile (Sand und ggf. Kies) und zur Absonderung von Blutwasser auf der Oberfläche deutlich erhöht. Dies hat negative Auswirkungen auf die Verarbeitbarkeit und die Festkörpereigenschaften der erhärteten Baustoffmischung. Daher kommen Stabilisierer (auch als Anti-Segregationsmittel, Anti-Blutmittel oder Viskositätsmodifizierer bezeichnet) zum Einsatz, um diese unerwünschten Effekte zu verhindern. Üblicherweise werden wasserlösliche nichtionische Abkömmlinge von Polysacchariden, insbesondere Cellulose- und Stärkederivate, in wässrigen Baustoffmischungen verwendet. Aber auch mikrobiell erzeugte Polysaccharide wie bspw. Welan Gum kommen entsprechend dem Stand der Technik zum Einsatz, um die unerwünschte Segregation und das Abscheiden von Blutwasser zu verhindern.

Die Zusatzmittel auf Basis wasserlöslicher nichtionischer Abkömmlinge von Polysacchariden sowie mikrobiell erzeugter Polysaccharide zeigen jedoch einige entscheidende Nachteile beim Einsatz in fließfähigen wässrigen Baustoffsystemen:
- Da die Anti-Blut- und Anti-Segregations-Eigenschaften v. a. durch eine Verdickung (Viskositätserhöhung) der Baustoffmischung erreicht werden, tritt in fließfähigen Baustoffanwendungen eine negative Beeinflussung der Fliesseigenschaften und somit der Verarbeitbarkeit auf. Weiterhin wird oft auch eine zu hohe Klebrigkeit beobachtet, die für diese fließfähigen Anwendungen unerwünscht ist.
- Für bestimmte Baustoffanwendungen (v. a. Beton) ist die Verwendung der Zusatzmittel in Form von wässrigen Lösungen notwendig. Die Herstellung von wässrigen Lösungen der bekannten Zusatzmittel ist jedoch schwierig, da z. B. Celluloseether in der Kälte und Hitze nicht gut löslich sind und teilweise ausflocken. Auch ist die (Lager-) Stabilität aufgrund von Abbaureaktionen über die Zeit nicht ausreichend (bakterieller Befall).
- Viele in der Baustoffindustrie eingesetzte Cellulosederivate zeigen abbindeverzögernde Eigenschaften.

Wasserlösliche nichtionische Abkömmlinge von Polysacchariden, insbesondere Cellulose- und Stärkederivate, werden in wässrigen Baustoffmischungen aber auch als Wasserretentionsmittel verwendet, um das unerwünschte Verdunsten des Wassers, das für die Hydratation und Verarbeitbarkeit erforderlich ist, bzw. dessen Abfließen in den Untergrund zu verzögern bzw. verhindern.

Mit solchen Additiven kann man in Anstrichsystemen, Putzen, Klebemörteln, Spachtelmassen und Fugenfüllern, aber auch in Spritzbetonen für den Tunnelbau sowie in Unterwasserbetonen die zentrale Funktion der Wasserretention kontrollieren. Dadurch haben derartige Zusätze auch entscheidenden Einfluss auf die Konsistenz (Plastizität), offene Zeit, Glättvermögen, Segregation, Klebrigkeit, Haftung (am Untergrund und am Werkzeug), Standfestigkeit und Abrutschwiderstand sowie Haftzug- und Druckfestigkeit bzw. Schwindung.

Auch in wasserbasierenden Anstrich- und Beschichtungssystemen werden entsprechend dem Stand der Technik u. a. Polysaccharidderivate eingesetzt, um das Absetzen z. B. der Pigmente zu verhindern. Dabei treten ebenfalls Probleme mit der Lagerstabilität der Mischungen aufgrund von mikrobiellem Befall auf.

Synthetische Polymere mit stabilisierenden Eigenschaften wurden in der Literatur bisher überwiegend als Additive in Bohrspülungen und bei der Bohrlochzementierung beschrieben. Dort dienen sie zur Reduzierung des Wasserverlusts von Zementschlämmen in die umgebende Gesteinsformation. So werden beispielsweise in der DE 29 31 897 A1, DE 40 34 642 A1, DE 199 26 355 A1 und DE 197 52 093 C2 Co- bzw. Terpolymere auf Basis 2-Acrylamido-2-methylpropansulfonsäure als Hilfsmittel bei der Bohrlochzementierung vorgeschlagen. Diese Polymere sind auf die speziellen Anforderungen der Anwendung im Bohrloch optimiert. Bei Verwendung in Baustoffmischungen wie Mörtel und Beton bzw. wasserbasierenden Anstrich- und Beschichtungssystemen zeigen sie Nachteile für den Anwender, da entweder die Fließeigenschaften zu stark eingeschränkt werden, die Abscheidung von Blutwasser nicht verhindert wird oder das Wasserrückhaltevermögen nicht ausreichend ist.

In der Patentschrift JP 10053627 werden Terpolymere aus N-Vinylacetamid, 2-Acrylamido-2-methylpropansulfonsäure und Acrylnitril als Stabilisierer für hochfließfähigen Beton beschrieben. Diese Terpolymere zeigen zwar eine gute stabilisierende Wirkung, können aber auch die Abscheidung von Blutwasser nicht verhindern. Zudem ist das Preis/Leistungsverhältnis verglichen mit Celluoseethern deutlich schlechter, da mit dem N-Vinylacetamid ein sehr hochpreisiges Monomer verwendet wird, so dass dem Anwender ein erheblicher wirtschaftlicher Nachteil entsteht.

In der DE 198 06 482 A1 und WO 02/10229 A1 werden sehr hochmolekulare sulfogruppenhaltige quartäre Polymere beschrieben, die sehr gute Wasserrückhaltungs-Eigenschaften zeigen. Darüber hinaus besitzen sie auch eine sehr gute stabilisierende Wirkung, indem sie die plastische Viskosität der Mischung stark heraufsetzen.

Aufgrund dieser starken Verdickung sind diese Polymere für fließfähige Baustoffmischungen bzw. bei wasserbasierenden Anstrich- und Beschichtungssystemen nicht geeignet, da die Verarbeitbarkeit für den Anwender in einem inakzeptablen Maße eingeschränkt wird. Weiterhin enthalten die beschriebenen Polymere einen gewissen Anteil an kationischen Monomeren, die hinsichtlich Fischtoxizität bedenklich sind.

In nicht fließfähigen Baustoffsystemen zeigen die in DE-OS 198 06 482 und WO 02/10229 A1 beschriebenen Copolymere den Nachteil, dass sie vor allem in Fliesenklebern, aber auch in Putzen nicht die geforderte Klebrigkeit aufweisen. So haftet der Fliesenkleber zu wenig an der Kelle und lässt sich zu schlecht mit der Zahntraufel wieder aufnehmen.

In beiden Anwendungen, vor allem aber in Putzanwendungen, stellt zudem die unzureichende Stabilität der Luftporen ein Problem dar. Die oft mit Luftporenbildnern eingeführte Luft platzt nach ca. 10 bis 20 Minuten deutlich auf, was wahrscheinlich auf die in den Polymeren enthaltenen kationischen Baueinheiten zurückzuführen ist.

Weiterhin ist in Fliesenklebern, aber auch in Putzen, die Verdickung in Gegenwart hoher Salzkonzentrationen notwendig. Im Gegensatz zu den Polymeren gemäß DE 198 06 482 A1 zeigen die hochmolekularen sulfogruppenhaltigen assoziativ verdickenden Copolymere gemäß der WO 02/10 229 A1 auch in Gegenwart hoher Salzkonzentrationen keinen drastischen Viskositätsabfall.

Der vorliegenden Erfindung lag die Aufgabe zugrunde, Copolymere und deren Anwendung als Wasserretentionsmittel, Stabilisierer und Rheologiemodifizierer für wässrige Baustoffsysteme sowie wasserbasierende Anstrich- und Beschichtungssysteme bereitzustellen, welche die genannten Nachteile des Standes der Technik nicht aufweisen, sondern die für die Anwendung in nicht fließfähigen Baustoffsystemen schlechte Luftporenstabilität und mangelnde Klebrigkeit der synthetischen Polymere verbessern, als Stabilisierer für wässrige fließfähige Baustoffsysteme sowie wasserbasierende Anstrich- und Beschichtungssysteme eine hervorragende stabilisierende Wirkung aufweisen und gleichzeitig die Viskosität des Systems nicht stark heraufsetzen, so dass die Verarbeitbarkeit nicht negativ beeinflusst wird bzw. im Falle von gepumpten Baustoffmischungen der Pumpendruck nicht signifikant erhöht wird.

Darüber hinaus sollen die Zusatzmittel den Baustoff- und Anstrichsystemen ausgezeichnete anwendungstechnische Eigenschaften bei der Verarbeitung und im erhärteten bzw. getrockneten Zustand verleihen.

Diese Aufgabe wurde erfindungsgemäß durch die Copolymere entsprechend Anspruch 1 gelöst.

Es hat sich nämlich überraschenderweise gezeigt, dass durch die erfindungsgemäßen Copolymere eine erhebliche Verbesserung der Luftporenstabilität in wässrigen Baustoffsystemen auf der Basis hydraulischer Bindemittel wie Zement, Kalk, Gips, Anhydrit usw. sowie in wasserbasierenden Anstrich- und Beschichtungssystemen erzielt wird.

Je nach Zusammensetzung der Copolymere lassen sich zudem die Rheologiemodifizierung, das Wasserrückhaltevermögen, und die Klebrigkeit optimal für die jeweilige Anwendung einstellen, was ebenfalls nicht vorhersehbar war.

Die wasserlöslichen sulfogruppenhaltigen Copolymere entsprechend der vorliegenden Erfindung bestehen aus mindestens drei der vier Baugruppen a), b), c) und d), wobei die Baugruppen a) und b) obligatorisch sind.

Die erste Baugruppe stellt ein sulfogruppenhaltiges substituiertes Acryl- oder Methacrylderivat der Formel (I) dar: 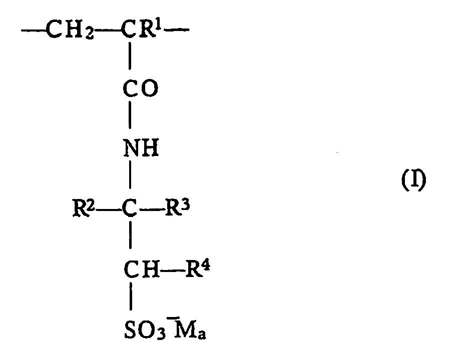 mit
- R¹ =: Wasserstoff oder Methyl,
- R², R³, R⁴ =: Wasserstoff, aliphatischer Kohlenwasserstoffrest mit 1 bis 6 C-Atomen, ggf. mit Methylgruppen substituierter Phenylrest und
- M =: Wasserstoff, ein- oder zweiwertiges Metallkation, unsubstitutiertes oder mit organischen Resten substituiertes Ammoniumion sowie
- a =: ½ oder 1.

Als ein- oder zweiwertiges Metallkation finden vorzugsweise Natrium-, Kalium-, Calcium- oder Magnesiumionen Verwendung. Die mit organischen Resten substituierten Ammoniumionen leiten sich bevorzugt von primären, sekundären oder tertiären C₁- bis C₂₀-Alkylaminen, C₁- bis C₂₀-Alkanolaminen, C₅- bis C₈-Cycloalkylaminen und C₆- bis C₁₄-Arylaminen ab. Beispiele für entsprechende Amine sind Methylamin, Dimethylamin, Trimethylamin, Ethanolamin, Diethanolamin, Triethanolamin, Cyclohexylamin, Dicyclohexylamin, Phenylamin sowie Diphenylamin in der protonierten Ammoniumform.

Die Baugruppe a) leitet sich ab von Monomeren wie 2-Acrylamido-2-methylpropansulfonsäure, 2-Methacrylamido-2-methylpropansulfonsäure, 2-Acrylamidobutansulfonsäure, 3-Acrylamido-3-methylbutansulfonsäure, 2-Acrylamido-2,4,4-trimethylpentansulfonsäure. Besonders bevorzugt ist 2-Acrylamido-2-methylpropansulfonsäure.

Die zweite Baugruppe b) entspricht der Formel (II): 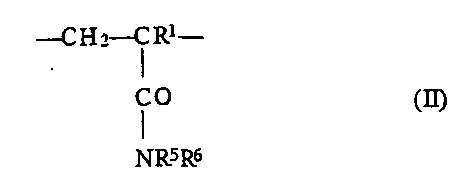 worin
- R¹: die oben genannte Bedeutung besitzt.
- R⁵ und R⁶: stehen unabhängig voneinander für Wasserstoff, einen aliphatischen Kohlenwasserstoffrest mit 1 bis 20 C-Atomen, einen cycloaliphatischen Kohlenwasserstoffrest mit 5 bis 8 C-Atomen oder einen Arylrest mit 6 bis 14 C-Atomen.

Als Monomere, welche die Struktur (II) bilden, kommen vorzugsweise folgende Verbindungen in Frage: Acrylamid, Methacrylamid, N-Methylacrylamid, N,N-Dimethylacrylamid, N-Ethylacrylamid, N-Cyclohexylacrylamid, N-Benzylacrylamid, N-Methylolacrylamid, N-tertiär Butylacrylamid usw.

Die dritte Baugruppe c) entspricht der Formel (III) 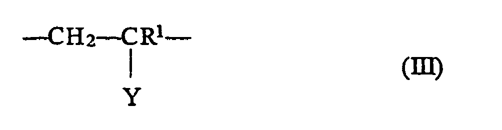 worin
- Y =: -COO(CₙH₂ₙO)ₚ-R⁷, -(CH₂)_{q}-O(CₙH₂ₙO)p-R⁷
- R⁷ =: 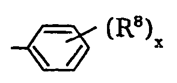 sowie ungesättigter oder gesättigter, linearer oder verzweigter aliphatischer Alkylrest mit 10 bis 40 C-Atomen
- R⁸ =: H, C₁- bis C₆-Alkyl-, Arylalkylgruppe mit C₁- bis C₁₂-Alkyl- und C₆- bis C₁₄-Axylrest
- n =: 2 bis 4
- p =: 0 bis 200
- q =: 0 bis 20
- x =: 0 bis 3 darstellen sowie
R¹ die oben genannte Bedeutung besitzt.

Bevorzugte Monomere, welche die Struktur (III) bilden, sind Tristyrylphenol-polyethylenglykol-1100-methacrylat, Behenylpolyethylenglykol-1100-methacrylat, Stearylpolyethylenglykol-1100-methacrylat, Tristyrylphenol-polyethylenglykol-1100-acrylat, Tristyrylphenol-polyethylenglykol-1100-monovinylether, Behenylpolyethylenglykol-1100-monovinylether, Stearylpolyethylenglykol-1100-monovinylether, Tristyrylphenol-polyethylenglykol-1100-vinylox-y-butylether, Behenylpolyethylenglykol-1100-vinyloxy-butylether, Tristyrylphenol-polyethylenglykol-block-propylenglykolallylether, Behenylpolyethylenglykol-block-propylenglykolallylether, Stearylpolyethylenglykol-block-propylenglykolallylether usw.

Die vierte Baugruppe d) entspricht der Formel (IV) 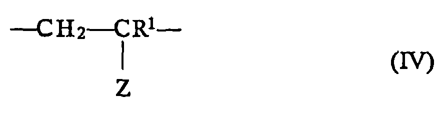 wobei
- Z =: -(CH₂)_{q}-O(CₙH₂ₙO)ₚ-R⁹
- R⁹ =: H, C₁- bis C₄-Alkyl darstellen sowie

R¹, n, p und q die oben genannte Bedeutung besitzen.

Bevorzugte Monomere, welche die Struktur (IV) bilden, sind Allylpolyethylenglykol-(350 bis 2000), Methylpolyethylenglykol-(350 bis 2000)-monovinylether, Polyethylenglykol-(500 bis 5000)-vinyloxybutylether, Polyethylenglykol-block-propylenglykol-(500 bis 5000)-vinyloxy-butylether, Methylpolyethylenglykol-block-propylenglykolallylether, usw.

Es ist als erfindungswesentlich anzusehen, dass die Copolymere aus 3 bis 96 Mol-% der Baugruppe a), 3 bis 96 Mol-% der Baugruppe b), 0,01 bis 10 Mol-% der Baugruppe c) und/oder 0,1 bis 30 Mol-% der Baugruppe d) bestehen. Vorzugsweise verwendete Copolymere enthalten 30 bis 80 Mol-% a), 5 bis 50 Mol-% b), 0,1 bis 5 Mol-% c) und/oder 0,2 bis 15 Mol-% d). Im Weiteren werden die Copolymere aus den Baugruppen a), b) und c) als Typ A bezeichnet, Copolymere aus den Baugruppen a), b), c) und d) als Typ B und Copolymere aus den Baugruppen a), b) und d) als Typ C.

Es ist im Rahmen der vorliegenden Erfindung noch möglich, dass die erfindungsgemäßen Copolymere des Typs B und C noch bis zu 50 Mol-%, insbesondere bis zu 20 Mol-%, bezogen auf die Mol-%-Summen der Baugruppen a), b), c) und d), einer weiteren Baugruppe e) der Formel (V) enthalten. 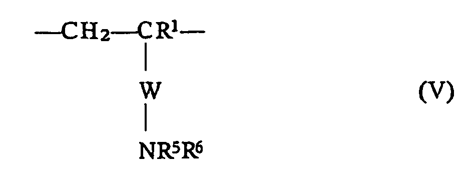 worin
- W =: -CO-O-(CH₂)ₘ-, -CO-NR²-(CH₂)ₘ-
- m =: 1 bis 6 darstellen und
R¹, R², R⁵ und R⁶ die oben genannte Bedeutung besitzen.

Als Monomere, welche die Struktur (V) bilden, kommen vorzugsweise folgende Verbindungen in Frage: [3-(Methacryloylamino)-propyl]-dimethylamin, [3-(Acryloylamino)-propyl]-dimethylamin, [2-(Methacryloyloxy)-ethyl]-dimethylamin, [2-(Acryloyl-oxy)-ethyl]-dimethylamin, [2-(Methacryloyl-oxy)-ethyl]-diethylamin, [2-(Acryloyl-oxy)-ethyl]-diethylamin usw.

Es ist im Rahmen der vorliegenden Erfindung weiterhin noch möglich, dass in den erfindungsgemäßen Copolymeren bis zu 50 % der Baugruppe a) durch ein sulfonsäurehaltiges Betainmonomer der Formel (VI) ersetzt werden. 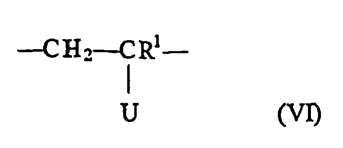 worin
- U =: 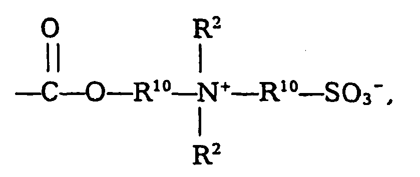 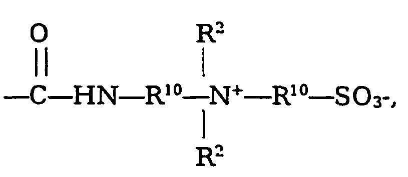 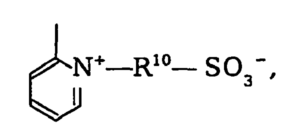
- R¹⁰ =: 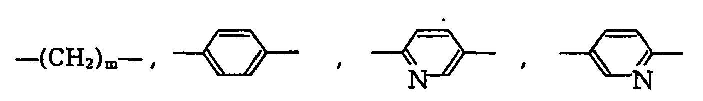
darstellen sowie
R¹, R² und m die oben genannte Bedeutung besitzen.

Als Monomere, welche die Struktur (VI) bilden, kommen vorzugsweise folgende Verbindungen in Frage: N-(3-Sulfopropyl)-N-methacryloxyethyl-N,N-dimethyl-ammonium-betain, N-(3-Sulfopropyl)-N-methacrylamidopropyl-N,N-dimethyl-ammonium-betain und 1-(3-Sulfopropyl)-2-vinyl-pyridinium-betain. Obwohl diese Monomere auch eine kationische Baugruppe enthalten, wirkt sich dies nicht negativ auf die Luftporenstabilität in der Anwendung aus.

Gegebenenfalls können die Copolymere zusätzlich durch den Einbau von kleinen Mengen Vernetzer eine leicht verzweigte oder vernetzte Struktur erhalten. Beispiele für solche Vernetzer-Komponenten sind Triallylamin, Triallylmethylammoniumchlorid, Tetraallylammoniumchlorid, N,N'-Methylenbisacrylamid; Triethylenglykolbismethacrylat, Triethylenglykolbisacrylat, Polyethylenglykol(400)-bismethacrylat und Polyethylenglykol(400)-bisacrylat. Diese Verbindungen dürfen nur in solchen Mengen eingesetzt werden, dass immer noch wasserlösliche Copolymere erhalten werden. Generell wird die Konzentration selten über 0,1 Mol-% bezogen auf die Summen der Baugruppen a), b), c), d), e) und f) liegen, ein Fachmann kann jedoch leicht die maximal einsetzbare Menge Vernetzer-Komponente bestimmen.

Die Herstellung der erfindungsgemäßen Copolymere erfolgt in an sich bekannter Weise durch Verknüpfung der die Strukturen a) bis d) bildenden Monomere durch radikalische, ionische oder komplex koordinative Substanz-, Lösungs-, Gel-, Emulsions-, Dispersions- oder Suspensionspolymerisation. Da es sich bei den erfindungsgemäßen Produkten um wasserlösliche Copolymere handelt, ist die Polymerisation in wässriger Phase, die Polymerisation in umgekehrter Emulsion bzw. die Polymerisation in inverser Suspension bevorzugt. In besonders bevorzugten Ausführungsformen erfolgt die Umsetzung als Gelpolymerisation in wässriger Phase.

Bei der bevorzugten Gelpolymerisation ist es vorteilhaft, wenn man bei niedrigen Reaktionstemperaturen und mit einem geeigneten Initiatorsystems polymerisiert. Durch die Kombination zweier Initiatorsysteme (Azoinitiatoren und Redoxsystem), die zuerst photochemisch bei niedrigen Temperaturen und anschließend aufgrund der Exothermie der Polymerisation thermisch gestartet werden, kann ein Umsatz von ≥ 99 % erreicht werden.

Sonstige Hilfsmittel, wie Molekulargewichtsregler, z. B. Thioglykolsäure, Mercaptoethanol, Ameisensäure und Natriumhypophosphit können ebenfalls verwendet werden.

Die Aufarbeitung des Gelblocks wird durch die Verwendung eines Trennmittels (z. B. Sitren 595 von der Firma Goldschmidt), welches das Verkleben des Gelgranulats verhindert, erleichtert. Die rieselfähigen Gelteilchen sind dadurch leichter auf ein Trockengitter zu verteilen. Somit wird der Trocknungsprozess erleichtert und es können sogar die Trockenzeiten verkürzt werden.

Die Gelpolymerisation erfolgt vorzugsweise bei - 5 bis 50 °C, wobei die Konzentration der wässrigen Lösung bevorzugt auf 35 bis 70 Gew.-% eingestellt wird. Zur Durchführung der Polymerisation gemäß einer bevorzugten Ausführungsform wird das sulfogruppenhaltige (Meth-) Acrylderivat in Form seiner handelsüblichen Säureform in Wasser gelöst, durch Zugabe eines Alkalimetallhydroxids neutralisiert, unter Rühren mit weiteren erfindungsgemäß zu verwendenden Monomeren sowie mit Puffern, Molekulargewichtsreglern u. a. Polymerisationshilfsmitteln vermischt. Nach Einstellung des Polymerisations-pH-Wertes, der vorzugsweise zwischen 4 und 9 liegt, erfolgt eine Spülung des Gemisches mit einem Schutzgas wie Helium oder Stickstoff und anschließend die Aufheizung oder Abkühlung auf die entsprechende Polymerisationstemperatur. Wählt man die ungerührte Gelpolymerisation als Ausführungsform, wird in bevorzugten Schichtdicken von 2 bis 20 cm, insbesondere 8 bis 10 cm bei adiabatischen Reaktionsbedingungen polymerisiert. Die Polymerisation wird durch Zugabe des Polymerisationsinitiators und durch Bestrahlung mit UV-Licht bei niedrigen Temperaturen (zwischen - 5 und 10 °C) gestartet. Das Polymer wird nach vollständigem Umsatz der Monomere unter Einsatz eines Trennmittels (z. B. Sitren 595 von der Firma Goldschmidt) zerkleinert, um durch eine größere Oberfläche das Trocknen zu beschleunigen.

Durch die möglichst schonenden Reaktions- und Trocknungsbedingungen können vernetzende Nebenreaktionen vermieden werden, so dass man Polymere erhält, die einen sehr geringen Gelanteil besitzen.

Die erfindungsgemäßen Copolymere besitzen vorzugsweise ein zahlenmittleres Molekulargewicht Mₙ von 50.000 bis 20.000.000 g/Mol und eignen sich hervorragend als Zusatzmittel für wässrige Baustoffsysteme, die hydraulische Bindemittel wie Zement, Kalk, Gips, Anhydrit usw. enthalten. Darüber hinaus sind sie in wasserbasierenden Anstrich- und Beschichtungssystemen anwendbar.

Copolymere des Typs A aus den Baueinheiten a), b) und c) zeigen überraschenderweise sehr gute Luftporenstabilität. Weiterhin besitzen sie sehr gute Wasserrückhalteeigenschaften und salzstabile verdickende Eigenschaften sowie gute Klebrigkeit (bspw. in einem Fliesenklebermörtel). Copolymere des Typs B aus den Baueinheiten a), b), c) und d) zeigen unter Erhalt der übrigen positiven Eigenschaften zusätzlich eine hervorragende Klebrigkeit. Beide erfindungsgemäßen Copolymere des Typs A und B eignen sich hervorragend für den Einsatz in nichtfließfähigen Baustoffsystemen wie bspw. Fliesenklebern, Putzen und Fugenfüllern. Sie verleihen diesen Baustoffen hervorragende anwendungstechnische Eigenschaften sowohl im Verarbeitungs- als auch im erhärteten bzw. getrockneten Zustand.

Copolymere des Typs C aus den Baueinheiten a), b) und d) besitzen zwar ebenfalls eine sehr gute Luftporenstabilität, jedoch sind die Wasserrückhalteeigenschaften, Klebrigkeit und verdickende Eigenschaften im Vergleich zu Polymeren des Typs A und B erheblich vermindert. Copolymere des Typs C besitzen jedoch in hochfließfähigen Baustoffsystemen bereits in niedriger Dosierung ausgezeichnete stabilisierende Eigenschaften und verhindern die Abscheidung von Blutwasser an der Oberfläche. Sie verleihen selbstverlaufenden Bodenspachtelmassen, Verguss- und Reparaturmörteln, Fließestrichen, Fliessbeton, selbstverdichtendem Beton, Unterwasserbeton, Unterwassermörtel, pigmenthaltigen Anstrichstoffen u. a. hervorragende anwendungstechnische Eigenschaften sowohl im Verarbeitungs- als auch im erhärteten bzw. getrockneten Zustand. Dabei wird die Viskosität (plastische Viskosität) der Baustoffmischung durch den Zusatz der Copolymere nicht wesentlich erhöht und die Fließgrenze bleibt nahezu unverändert. Die Verarbeitbarkeit des fließfähigen Baustoffsystems wird somit nicht beeinträchtigt. Außerdem weisen die wässrigen Lösungen der Copolymere C eine sehr gute Lagerstabilität auf.

Die erfindungsgemäßen Copolymere des Typs B und C zeichnen sich weiterhin dadurch aus, dass durch die enthaltene Baueinheit d) die Glasübergangstemperatur erniedrigt wird, was für die Anwendung in wasserbasierenden Anstrich- und Beschichtungssystemen vorteilhaft ist. Dieser Effekt wird noch verstärkt, wenn Monomerbausteine der Baugruppe e) enthalten sind.

Die erfindungsgemäßen Copolymere können auch in Kombination mit nichtionischen Polysaccharid-Derivaten wie Methylcellulose (MC), Hydroxyethylcellulose (HEC), Hydroxypropylcellulose (HPC), Methylhydroxyethylcellulose (MHEC), Methylhydroxypropylcellulose (MHPC) sowie Welan Gum oder Diutan Gum eingesetzt werden.

Die bevorzugten Einsatzmengen der erfindungsgemäßen Copolymere liegen in Abhängigkeit von der Verwendungsart zwischen 0,001 und 5 Gew.-% bezogen auf das Trockengewicht des Baustoff-, Anstrich- bzw. Beschichtungssystems.

Die getrockneten Copolymere werden in Pulverform für Trockenmörtelanwendungen (z. B. Fliesenkleber, Vergussmörtel, Fließestriche) ihrer erfindungsgemäßen Verwendung zugeführt. Dabei ist die Größenverteilung der Teilchen durch Anpassung der Mahlparameter so zu wählen, dass der mittlere Teilchendurchmesser kleiner 100 µm ist und der Anteil an Partikeln mit einem Teilchendurchmesser größer 200 µm kleiner als 2 Gew.-% ist. Bevorzugt sind solche Pulver, deren mittlerer Teilchendurchmesser kleiner 60 µm ist und der Anteil an Partikeln mit einem Teilchendurchmesser größer 120 µm kleiner als 2 Gew.-% ist. Besonders bevorzugt sind solche Pulver, deren mittlerer Teilchendurchmesser kleiner 50 µm ist und der Anteil an Partikeln mit einem Teilchendurchmesser größer 100 µm kleiner als 2 Gew.-% ist.

Im Beton dagegen werden Zusatzmittel allgemein und auch Stabilisierer im Speziellen bevorzugt in Form wässriger Lösungen eingesetzt. Zur Herstellung der Lösungen eignen sich besonders die gröberen Granulate der erfindungsgemäßen Copolymere mit einem mittleren Teilchendurchmesser zwischen 300 µm und 800 µm, wobei der Anteil an Partikeln mit einem Teilchendurchmesser kleiner 100 µm geringer als 2 Gew.-% ist. Gleiches gilt, wenn die erfindungsgemäßen Copolymere in anderen Betonzusatzmitteln bzw. Formulierungen aus Betonzusatzmitteln aufgelöst werden (z.B. in einem Fließmittel).

Die nachfolgenden Beispiele sollen die Erfindung näher erläutern.

### Beispiele

### Copolymer 1

In einem 1 1-Dreihalskolben mit Rührer und Thermometer wurden 650 g Wasser vorgelegt. Unter Rühren wurden 87 g Natriumhydroxidplätzchen aufgelöst und langsam 450 g (2,17 Mol, 56,6 Mol-%) 2-Acrylamido-2-methylpropansulfonsäure (I) zugegeben und bis zum Erhalt einer klaren Lösung gerührt. Nach Zusatz von 0,50 g Citronensäurehydrat wurde unter Rühren und Kühlen 5 Gew.-%ige wässrige Natronlauge zugesetzt und ein pH-Wert von 4,60 eingestellt. Anschließend wurden nacheinander 164 g (1,64 Mol, 42,8 Mol-%) N,N-Dimethylacrylamid (II) und 8, 6 g (0,023 Mol, 0,6 Mol-%) Tristyrylphenol-polyethylenglykol-1100-methacrylat (Sipomer SEM 25 der Firma Rhodia; mit 25 Ethylenglykoleinheiten) (III) zugesetzt, wobei der pH-Wert auf 3 abfiel. Als Molekulargewichtsregler wurden 300 ppm Ameisensäure zugegeben. Die Lösung wurde mit 20 %iger Natronlauge auf pH = 6,0 eingestellt, durch 30 minütige Spülung mit Stickstoff inertisiert und auf ca. 5 °C abgekühlt. Die Lösung wurde in einen Plastikbehälter mit den Maßen (b*t*h) 15 cm *10cm *20 cm umgefüllt und anschließend wurden nacheinander 150 mg 2,2'-Azo-bis-(2-amidinopropan)-dihydrochlorid, 1,0 g 1 %iger Rongalit C-Lösung und 10 g 0,1 %iger tert.-Butylhydroperoxidlösung zugesetzt. Die Polymerisation wurde durch Bestrahlen mit UV-Licht (zwei Philips Röhren; Cleo Performance 40 W) gestartet. Nach ca. 2 - 3 h wurde das harte Gel aus dem Plastikbehälter genommen und mit einer Schere in ca. 5 cm* 5 cm* 5 cm große Gelwürfel geschnitten. Bevor die Gelwürfel mittels eines herkömmlichen Fleischwolfs zerkleinert wurden, wurden sie mit dem Trennmittel Sitren 595 (Polydimethylsiloxan-Emulsion; Firma Goldschmidt) eingestrichen. Bei dem Trennmittel handelt es sich um eine
Polydimethylsiloxanemulsion, die 1 : 20 mit Wasser verdünnt wurde.

Das erhaltene Gelgranulat wurde gleichmäßig auf Trockengitter verteilt und in einem Umlufttrockenschrank bei ca. 90 - 120 °C im Vakuum bis zur Gewichtskonstanz getrocknet.

Es wurden ca. 650 g eines weißen, harten Granulats erhalten, welches mit Hilfe einer Zentrifugalmühle in einen pulverigen Zustand überführt wurde. Der mittlere Teilchendurchmesser des Polymerpulvers betrug 40 µm und der Anteil an Partikeln mit einem Teilchendurchmesser größer 100 µm war kleiner als 1 Gew.-%.

### Copolymer 2

Entsprechend Copolymer 1 wurde Copolymer 2 aus 53 Mol-% 2-Acrylamido-2-methylpropansulfonsäure (I), 46,7 Mol-% Acrylamid (II) und 0,3 Mol-% Tristyrylphenol-polyethylenglykol-1100-methacrylat (Sipomer SEM 25 der Firma Rhodia) (III) hergestellt. Als Molekulargewichtsregler wurden 1200 ppm Ameisensäure zugegeben.

### Copolymer 3

Entsprechend Copolymer 1 wurde Copolymer 3 aus 54 Mol-% 2-Acrylamido-2-methylpropansulfonsäure (I), 45,8 Mol-% Acrylamid (II) und 0,2 Mol-% Stearylpolyethylenglykol-1100-methacrylat (Plex 6877-O der Firma Röhm) (III) hergestellt. Als Molekulargewichtsregler wurden 1200 ppm Ameisensäure zugegeben.

### Copolymer 4

Entsprechend Copolymer 1 wurde Copolymer 4 aus 50,6 Mol-% 2-Acrylamido-2-methylpropansulfonsäure (I), 47,6 Mol-% Acrylamid (II), 0,2 Mol-% Tristyrylphenol-polyethylenglykol-1100-methacrylat (Sipomer SEM 25 der Firma Rhodia) (III) und 1,6 Mol-% Polyethylenglykol-block-propylenglykol-(1100)-vinyloxy-butylether (Emulsogen R 208 der Fa. Clariant) (IV) hergestellt. Als Molekulargewichtsregler wurden 1.000 ppm Ameisensäure zugegeben.

### Copolymer 5

Entsprechend Copolymer 1 wurde Copolymer 5 aus 54,3 Mol-% 2-Acrylamido-2-methylpropansulfonsäure (I), 44,3 Mol-% Acrylamid (II), 0,1 Mol-% Stearylpolyethylenglykol-1100-methacrylat (Plex 6877-O der Firma Röhm) (III) und 1,3 Mol-% Polyethylenglykol-block-propylenglykol-(1100)-vinyloxy-butylether (Emulsogen R 208 der Fa. Clariant) (IV) hergestellt. Als Molekulargewichtsregler wurden 1.000 ppm Ameisensäure zugegeben.

### Copolymer 6

Entsprechend Copolymer 1 wurde Copolymer 6 aus 52,6 Mol-% 2-Acrylamido-2-methylpropansulfonsäure (I), 45,6 Mol-% Acrylamid (II), 0,2 Mol-% Tristyrylphenol-polyethylenglykol-1100-methacrylat (Sipomer SEM 25 der Firma Rhodia) (III), 1,1 Mol-% Polyethylenglykol-block-propylenglykol-(790)-vinyloxy-butylether (Emulsogen R 109 der Fa. Clariant) (IV) und 0,5 Mol-% Polyethylenglykol-block-propylenglykol-(3000)-vinyloxy-butylether (IV) hergestellt. Als Molekulargewichtsregler wurden 800 ppm Ameisensäure zugegeben.

### Copolymer 7

Entsprechend Copolymer 1 wurde Copolymer 7 aus 58,4 Mol-% 2-Acrylamido-2-methylpropansulfonsäure (I), 27,2 Mol-% Acrylamid (II), 0,3 Mol-% Tristyrylphenol-polyethylenglykol-1100-methacrylat (Sipomer SEM 25 der Firma Rhodia) (III), 1,7 Mol-% Polyethylenglykol-block-propylenglykol-(1100)-vinyloxy-butylether (Emulsogen R 208 der Fa. Clariant) (IV) und 12,4 Mol-% [3-(Acryloylamino)-propyl]-dimethylamin (V) hergestellt. Als Molekulargewichtsregler wurden 800 ppm Ameisensäure zugegeben.

### Copolymer 8

Entsprechend Copolymer 1 wurde Copolymer 8 aus 56,3 Mol-% 2-Acrylamido-2-methylpropansulfonsäure (I), 42,3 Mol-% Acrylamid (II) und 1,4 Mol-% Polyethylenglykol-(1100)-vinyloxy-butylether (IV) hergestellt. Als Molekulargewichtsregler wurden 300 ppm Ameisensäure zugegeben.

### Copolymer 9

Entsprechend Copolymer 1 wurde Copolymer 9 aus 70,2 Mol-% 2-Acrylamido-2-methylpropansulfonsäure (I), 27,4 Mol-% N,N-Dimethylacrylamid (II) und 2,4 Mol-% Polyethylenglykol-block-propylenglykol-(790)-vinyloxy-butylether (Emulsogen R 109 der Fa. Clariant) (IV) hergestellt. Als Molekulargewichtsregler wurden 600 ppm Ameisensäure zugegeben.

### Copolymer 10

Entsprechend Copolymer 1 wurde Copolymer 10 aus 46,6 Mol-% 2-Acrylamido-2-methylpropansulfonsäure (I), 52,1 Mol-% Acrylamid (II) und 1,3 Mol-% Polyethylenglykol-block-propylenglykol-(1100)-vinyloxy-butylether (Emulsogen R 208 der Fa. Clariant) (IV) hergestellt. Als Molekulargewichtsregler wurden 800 ppm Ameisensäure zugegeben.

### Copolymer 11

Entsprechend Copolymer 1 wurde Copolymer 11 aus 60,3 Mol-% 2-Acrylamido-2-methylpropansulfonsäure (I), 35,3 Mol-% N,N-Dimethylacrylamid (II), 3,5 Mol-% Polyethylenglykol-block-propylenglykol-(790)-vinyloxy-butylether (Emulsogen R 109 der Fa. Clariant) (IV) und 0,9 Mol-% Polyethylenglykol-block-propylenglykol-(3000)-vinyloxy-butylether (IV) hergestellt. Als Molekulargewichtsregler wurden 500 ppm Ameisensäure zugegeben.

### Copolymer 12

Entsprechend Copolymer 1 wurde Copolymer 12 aus 47,5 Mol-% 2-Acrylamido-2-methylpropansulfonsäure (I), 42,3 Mol-% Acrylamid (II), 1,5 Mol-% Polyethylenglykol-block-propylenglykol-(1100)-vinyloxy-butylether (Emulsogen R 208 der Fa. Clariant) (IV) und 8,7 Mol-% [3-(Acryloylamino)-propyl]-dimethylamin (V) hergestellt. Als Molekulargewichtsregler wurden 800 ppm Ameisensäure zugegeben.

### Vergleichsbeispiel 1

Entsprechend DE 198 06 482 A1 wurde das Vergleichsbeispiel 1 aus 68,8 Mol-% 2-Acrylamido-2-methylpropansulfonsäure, 25,4 Mol-% N,N-Dimethylacrylamid, 5,4 Mol-% [2-(Methacryloyloxy)-ethyl]-trimethylammoniummethosulfat und 0,4 Mol-% Allylpolyethylenglykol-550 hergestellt.

### Vergleichsbeispiel 2

Entsprechend WO 02/10229 A1 wurde das Vergleichsbeispiel 2 aus 69,0 Mol-% 2-Acrylamido-2-methylpropansulfonsäure, 26,4 Mol-% N,N-Dimethylacrylamid, 3,8 Mol-% [2-(Methacryloylamido)-propyl]-trimethylammoniumchlorid und 0,8 Mol-% Tristyrylphenol-polyethylenglykol-1100-methacrylat hergestellt.

In der Tabelle 1 sind die Zerkleinerungseigenschaften und die notwendigen Trocknungszeiten angegeben. Die Restfeuchte des gemahlenen Pulvers ist ein Maß für die Vollständigkeit des Trocknungsprozesses.

**Tabelle 1**

| | Geleigenschaften | Trocknung | | Restfeuchte |
|---|---|---|---|---|
| | | Temperatur | Zeit | |
| | | [°C] | [min] | [Gew.-%] |
| Beispiel 1 | sehr harte, kleine gut rieselfähige Teilchen | 90 | 100 | 3 |
| Beispiel 2 | analog Beispiel 1 | 90 | 100 | 6 |
| Beispiel 3 | analog Beispiel 1 | 90 | 100 | 5 |
| Beispiel 4 | harte, kleine gut rieselfähige Teilchen | 100 | 90 | 6 |
| Beispiel 5 | analog Beispiel 4 | 100 | 90 | 3 |
| Beispiel 6 | analog Beispiel 4 | 100 | 90 | 7 |
| Beispiel 7 | analog Beispiel 4 | 100 | 100 | 5 |
| Beispiel 8 | harte Teilchen, die deutlich größer sind als unter Beispiel 1 | 100 | 110 | 4 |
| Beispiel 9 | analog Beispiel 8 | 100 | 110 | 5 |
| Beispiel 10 | analog Beispiel 8 | 100 | 110 | 6 |
| Beispiel 11 | analog Beispiel 8 | 100 | 110 | 5 |
| Beispiel 12 | analog Beispiel 8 | 100 | 100 | 4 |
| | | | | |
| Vergleichsbeispiel 1 | weiches Gel; nur schwer zerkleinerbar; die Gelteilchen verkleben wieder zu Klumpen | 100 | 120 | 6 |
| Vergleichsbeispiel 2 | sehr harte, kleine gut rieselfähige Teilchen | 90 | 100 | 3 |

In Tabelle 2 sind Lösungsviskositäten von wässrigen Lösungen angegeben.

**Tabelle 2**

| | Viskosität 1 % ige Lsg | Viskosität 1 % ige Lsg mit 1 % Natriumsulfat |
|---|---|---|
| | [mPa*s]¹⁾ | [mPa*s]¹⁾ |
| Beispiel 1 | 9160 | 8210 |
| Beispiel 2 | 12620 | 11710 |
| Beispiel 3 | 13480 | 6930 |
| Beispiel 4 | 6200 | 3230 |
| Beispiel 5 | 7260 | 3150 |
| Beispiel 6 | 7340 | 2130 |
| Beispiel 7 | 7750 | 6160 |
| Beispiel 8 | 8830 | 850 |
| Beispiel 9 | 6210 | 620 |
| Beispiel 10 | 5130 | 320 |
| Beispiel 11 | 5420 | 340 |
| Beispiel 12 | 3630 | 310 |
| | | |
| Vergleichsbeispiel 1 | 6200 | 260 |
| Vergleichsbeispiel 2 | 7150 | 2630 |

| | | |
|---|---|---|
| ¹⁾ 20 °C, Brookfield, in H₂O (gemessen bei 5 Umdrehungen pro Minute) | | |

Man sieht deutlich, dass die Viskositäten der Polymerlösungen bei Elektrolytzugabe gegenüber dem Vergleichsbeispiel 1 erheblich höher sind obwohl die Viskositäten ohne Salzzugabe auf ähnlichem Niveau liegen. Wie bei Vergleichsbeispiel 2 fallen die Viskositäten der Beispiele 1 bis 3 und 4 bis 7 unter Elektrolyteinfluss weniger stark ab. Der Viskositätsabfall ist bei den Beispielen 8 bis 12 deutlich stärker, jedoch nicht so stark wie bei Vergleichsbeispiel 1.

### Anwendungsbeispiele

Die anwendungstechnische Beurteilung der erfindungsgemäßen Copolymere erfolgte anhand von Testgemischen aus dem Bereich Fliesenklebemörtel, Maschinenputz, selbstverlaufende Spachtelmasse, Vergussmörtel und selbstverdichtender Beton.

### 1) Fliesenklebemörtel:

Hierzu wurde praxisnah unter Einsatz einer gebrauchsfertig formulierten Trockenmischung geprüft, der die erfindungsgemäßen Copolymere bzw. die Vergleichsprodukte in fester Form zugemischt wurden. Im Anschluss an die Trockenvermischung wurde eine bestimmte Wassermenge zugegeben und mittels einer Bohrmaschine mit G3 Mischer intensiv verrührt (Dauer 2*15 Sekunden). Anschließend ließ man die angerührte Mischung 5 min reifen und wurde anschließend einer ersten visuellen Prüfung unterzogen.

### Bestimmung des Ausbreitmaßes

Die Bestimmung des Ausbreitmaßes erfolgte nach der Reifezeit und ein zweites mal 30 min nach dem Anrühren (nach kurzem Aufrühren mit der Hand) gemäß DIN 18555, Teil 2.

### Bestimmung der Wasserretention

Die Wasserretention wurde ca. 15 min nach dem Anrühren gemäß DIN 18555, Teil 7 ermittelt.

### Bestimmung der Luftporenstabilität

Die Luftporenstabilität wurde qualitativ durch visuelle Beurteilung bestimmt.

### Bestimmung der Klebrigkeit

Die Klebrigkeit wurde qualitativ durch visuelle Beurteilung bestimmt.

### Bestimmung der Benetzung der Fliese

Die Fliesenkleberformulierung wurde auf eine Faserzementplatte appliziert und nach 10 Minuten eine Fliese (5 x 5 cm) aufgelegt, die für 30 Sekunden mit einem Gewicht von 2 kg belastet wurde. Nach weiteren 60 Minuten wurde die Fliese abgenommen und es wurde ermittelt, zu welchem Prozentsatz die Fliesenrückseite noch mit Kleber behaftet war.

Die Zusammensetzung des Fliesenklebemörtels ist aus Tabelle 3 zu entnehmen.

**Tabelle 3**

| Zusammensetzung der Testmischung (in Gew.-%) | |
|---|---|
| Komponente | Menge |
| Portlandzement ¹⁾ | 36,00 |
| Quarzsand (0,05 - 0,4 mm) | 56,90 |
| Weißpigment ²⁾ | 5,50 |
| Cellulosefasern | 0,50 |
| Wasserrückhaltemittel | 0,16 |

| | |
|---|---|
| ¹⁾ CEM II 42,5 R ²⁾ Ulmer Weiß "Juraperle MHS" | |

Die mit den erfindungsgemäßen Copolymeren und den Polymeren der Vergleichsbeispielen erhaltenen Testergebnisse sind in Tabelle 4 dargestellt.

**Tabelle 4**

| Verarbeitungseigenschaften eines Klebemörtels für Keramikfliesen, der mit erfindungsgemäßen Abmischungen und dem Stand der Technik entsprechenden Vergleichsbeispielen modifiziert wurde. | | | | | | |
|---|---|---|---|---|---|---|
| Zusatzmittel | Ausbreitmaß (cm) | Ausbreitmaß nach 30 min (cm) | Wasserretention (%) | Klebrigkeit | Benetzung (%) | Luftporen, stabilität |
| Beispiel 1 | 14,1 | 14,8 | 98,7 | gut | 77 | sehr gut |
| Beispiel 2 | 14,2 | 14,6 | 99,1 | gut | 81 | sehr gut |
| Beispiel 3 | 14,1 | 14,5 | 98,6 | gut | 75 | sehr gut |
| Beispiel 4 Beispiel 5 | 14,2 | 14,3 | 98,8 | sehr gut | 82 | sehr gut |
| Beispiel 6 | 14,6 | 14,8 | 98,9 | sehr gut | 78 | sehr gut |
| Beispiel 7 | 14,1 | 14,3 | 99,2 | sehr gut | 83 | sehr gut |
| | 14,8 | 14,9 | 98,7 | sehr gut | 88 | sehr gut |
| Beispiel 9 | 16,9 | 17,0 | 96,5 | mittel | 65 | gut |
| Beispiel 12 | 16,5 | 16,9 | 97,2 | mittel | 68 | gut |
| | | | | | | |
| Vergleichsbeispiel 1 | 14,9 | 14,8 | 98,8 | mittel | 60 | mittel |
| Vergleichsbeispiel 2 | 15,0 | 15,5 | 98,5 | gut | 65 | gut |

| | | | | | | |
|---|---|---|---|---|---|---|
| Dosierung: 0,16 Gew.-% Wassermenge: 260 g Klebemörtel: 1.000 g | | | | | | |

Die Testergebnisse in Tabelle 4 zeigen, dass die erfindungsgemäßen Copolymere vom Typ A (Beispiele 1-3) ähnliche Wasserretentionswerte und Klebrigkeit ergeben wie die Vergleichsbeispiele 1 und 2. Jedoch sind die Ausbreitmaße, Benetzung und Luftporenstabilität deutlich besser als bei den Vergleichsbeispielen 1 und 2, die kationische Monomere enthalten.

Die erfindungsgemäßen Copolymere vom Typ B (Beispiele 4-7) zeigen die gleichen positiven Eigenschaften und zusätzlich noch eine hervorragende Klebrigkeit. Dabei besitzt die besten Eigenschaften des Typs B das Beispiel 6, das zwei Polyethylenglykol-block-propylenglykol-vinyloxybutylether unterschiedlicher Kettenlänge enthält.

Dagegen zeigen die Testergebnisse mit den Beispielen 9 und 12, dass die erfindungsgemäßen Copolymere des Typs C für diese Anwendung nicht geeignet sind. Wasserretentionswerte, Klebrigkeit, Ausbreitmaße, Benetzung und Luftporenstabilität fallen gegenüber den Copolymeren des Typs A und B ab.

### 2) Maschinenputz:

Hierzu wurde praxisnah unter Einsatz einer gebrauchsfertig formulierten Trockenmischung geprüft, der die erfindungsgemäßen Copolymere bzw. die Vergleichsprodukte in fester Form zugemischt wurden. Im Anschluss an die Trockenvermischung wurde eine bestimmte Wassermenge zugegeben und mittels einer Bohrmaschine mit G3 Mischer intensiv verrührt (Dauer 2*15 Sekunden). Anschließend ließ man die angerührte Mischung 2 min reifen und wurde einer ersten visuellen Prüfung unterzogen.

### Bestimmung des Ausbreitmaßes

Die Bestimmung des Ausbreitmaßes erfolgte nach der Reifezeit gemäß DIN 18555, Teil 2. s

### Bestimmung der Wasserretention

Die Wasserretention wurde nach der Reifezeit gemäß DIN 18555, Teil 7 ermittelt.

### Bestimmung des Luftporengehalts

Der Luftporengehalt wurde nach der Reifezeit gemäß DIN 18555, Teil 7 ermittelt.

### Bestimmung der Luftporenstabilität

Die Luftporenstabilität wurde qualitativ durch visuelle Beurteilung bestimmt.

### Beurteilung des Erhärtungsverhaltens

Die Härte nach 24 h wurde visuell beurteilt (qualitative Beurteilung).

Die Zusammensetzung des Maschinenputzes ist aus Tabelle 5 zu entnehmen.

**Tabelle 5**

| Zusammensetzung der Testmischung (in Gew.-%) | |
|---|---|
| Komponente | Menge |
| Kalkhydrat | 10,00 |
| Kalksteinsand (0,1 - 1 mm) | 50,68 |
| Stuckgips | 39,00 |
| Luftporenbildner ¹⁾ | 0,02 |
| Abbindeverzögerer ²⁾ | 0,10 |
| Wasserrückhaltemittel | 0,20 |

| | |
|---|---|
| ¹⁾ Hostapon OSB ²⁾ Weinsäure | |

**Tabelle 6**

| Verarbeitungs- und Erhärtungseigenschaften eines Maschinenputzes auf Kalk-Gips-Basis, der mit den erfindungsgemäßen Copolymeren bzw. den Vergleichsbeispielen modifiziert wurde. | | | | | |
|---|---|---|---|---|---|
| Zusatzmittel | Ausbreitmaß (cm) | Luftporen (Vol.-%) | Luftporenstabilität nach 20 min | Wasserretention (%) | Härte nach 24 h (visuell) |
| Beispiel 2 | 14,2 | 17,5 | sehr gut | 98,7 | Hart |
| Beispiel 3 | 14,7 | 18,7 | sehr gut | 98,9 | Hart |
| Beispiel 4 | 14,0 | 21,0 | sehr gut | 99,2 | Hart |
| Beispiel 6 | 13,7 | 22,1 | sehr gut | 99,1 | Hart |
| Beispiel 7 | 13,9 | 21,3 | sehr gut | 98,9 | Hart |
| Beispiel 9 | 15,5 | 16,5 | gut | 95,2 | Hart |
| Beispiel 12 | 15,2 | 18,4 | gut | 96,0 | Hart |
| | | | | | |
| Vergleichsbeispiel 1 | 15,0 | 17,0 | mittel | 98,9 | Hart |
| Vergleichsbeispiel 2 | 14,3 | 18,2 | mittel | 98,9 | Hart |

| | | | | | |
|---|---|---|---|---|---|
| Dosierung: 0,20 Gew.-% Trockenmörtel: 2.000 g Wasser: 700 g | | | | | |

Die Testergebnisse in Tabelle 6 zeigen, dass die erfindungsgemäßen Copolymere vom Typ A (Beispiele 2-3) und B (Beispiele 4, 6 und 7) hervorragende Wasserretentionswerte ergeben (ähnlich wie die Vergleichsbeispiele 1 und 2). Jedoch sind die Ausbreitmaße insbesondere der Copolymere vom Typ B besser als bei den Vergleichsbeispielen 1 und 2. Auffällig ist ebenfalls, dass die Stabilität der eingeführten Luftporen bei Verwendung der erfindungsgemäßen Copolymere erheblich besser ist als bei den Vergleichsbeispielen 1 und 2, die kationische Monomere enthalten.

Dagegen zeigen die Testergebnisse mit den Beispielen 9 und 12, dass die erfindungsgemäßen Copolymere des Typs C für diese Anwendung nicht geeignet sind. Wasserretentionswerte, Ausbreitmaße und Luftporengehalt fallen gegenüber den Copolymeren des Typs A und B ab.

### 3) Selbstverlaufende zementäre Spachtelmasse:

In selbstverlaufenden zementären Spachtelmassen findet gemäß dem Stand der Technik Casein Verwendung, das dabei sowohl als Fließmittel, aber auch teilweise als Stabilisierer wirkt. Es bedarf nur noch geringer Mengen an Celluloseether, um eine Stabilisierung (Verhindern der Segregation und des Blutens) der Mischung zu erreichen. Jedoch lassen sich solche, auch als Self Leveling Underlayments (SLU) bezeichnete Spachtelmassen ebenso mit Polycarboxylatether-Fließmitteln verflüssigen. Hier ist ebenso die Zugabe eines Stabilisierers notwendig.

Die selbstverlaufende zementäre Spachtelmasse wurde im Labor mit einem Mörtelmischer nach DIN EN 196-1 gemischt. Der Mischvorgang wurde gemäß EN 1937 durchgeführt. Die Mischzeit betrug insgesamt 7 min und 55 sec.

Die Fließmaße (= Durchmesser des Ausbreitkuchens in cm) wurden in Anlehnung an EN 12706 (Ausgabe November 1999) mit dem vorgeschriebenen Ring (Innendurchmesser = 30 mm, Höhe = 50 mm) auf einer ebenen, trockenen Glasplatte bestimmt. Die Fließmaßbestimmung wurde pro Mischung dreimal durchgeführt und zwar zu den Zeitpunkten t = 8, 30, 45 min (die Mischung wurde vor der Fließmaßbestimmung mit dem Löffel jeweils 60 Sekunden lang wieder aufgerührt).

### Bestimmung der Selbstheilung

Die Selbstheilungseigenschaften der applizierten Spachtelmassen wurden mit dem sogenannten Messerschnitt-Test untersucht. Dazu wurde zunächst ein Ausbreitkuchen zum Zeitpunkt t = 8 min auf einer ebenen Kunststoffplatte erzeugt, wozu wiederum der gemäß EN 12706 vorgeschriebene Ring verwendet wurde. Durch diesen liegengebliebenen kreisrunden Ausbreitkuchen wurden Schnitte mit einem gewöhnlichen Küchenmesser gezogen, so dass die Klinge während des gesamten Schnitts (ca. 2 sec lang) die Kunststoffplatte am Grunde des Ausbreitkuchens streifte. Die Messerschnitte wurden zu den vier Zeitpunkten t = 8, 15, 30 und 45 min nach Mischbeginn ausgeführt.

Der Ausbreitkuchen wurde danach 24 Stunden lang bei Normklima (+ 20 °C, 65 % relative Luftfeuchte) zur Aushärtung gelagert und anschließend wurden die Positionen, an denen am Vortag die Messerschnitte angebracht worden waren, visuell und ggf. durch Befühlen mit den Fingern danach beurteilt, wie gut oder schlecht die durch die Messerschnitte im Ausbreitkuchen erzeugten Furchen wieder verheilt (d. h. ineinandergeflossen) waren.

Zur Beurteilung der Selbstheilungseigenschaften wurde die folgende siebenstufige Notenskala verwendet:
- Note 1:: Schnitt verläuft vollständig, unsichtbar
- Note 2:: Schnitt verläuft, jedoch sichtbar
- Note 3:: Schnitt verläuft, jedoch Rand sichtbar
- Note 4:: Schnitt verläuft, jedoch Rand gut sichtbar
- Note 5:: Schnitt verläuft schlecht, Einschnitt bleibt zurück
- Note 6:: Schnitt verläuft schlecht, tiefer Einschnitt bleibt zurück
- Note 7:: Schnitt verläuft nicht, Einschnitt bis auf den Grund der Schicht bleibt zurück

Die Zusammensetzung der selbstverlaufenden zementären Spachtelmasse ist aus Tabelle 7 zu entnehmen.

**Tabelle 7**

| Zusammensetzung der Testmischung (in Gew.-%) | |
|---|---|
| Komponente | Menge |
| Portlandzement ¹⁾ | 18,50 |
| Tonerdeschmelzzement (ca. 40 % Al₂O₃) | 11,50 |
| Quarzsand (0,05 - 0,315 mm) | 40,54 |
| Kalksteinmehl (Calciumcarbonat, 10-20 µm) | 19,40 |
| Calciumsulfat (wasserfrei, synthetischer Anhydrit) | 6,50 |
| Redispersionspulver ²⁾ | 2,00 |
| Schwundreduzierer ³⁾ | 0, 60 |
| Melflux 2651 F ⁴⁾ | 0,40 |
| Verzögerer ⁵⁾ | 0,30 |
| Beschleuniger ⁶⁾ | 0,10 |
| Entschäumer ⁷⁾ | 0,15 |
| Stabilisierer ⁸⁾ | 0,01 |

| | |
|---|---|
| ¹⁾ CEM I 42,5 R ²⁾ VINNAPAS RE 523 Z, Produkt der Fa. Wacker, Burghausen ³⁾ Neopentylglykol, Produkt der Fa. Syskem Chemiehandel GmbH, Wuppertal ⁴⁾ Produkt der Fa. Degussa Construction Polymers GmbH, Trostberg ⁵⁾ Zitronensäure ⁶⁾ Lithiumcarbonat ⁷⁾ Agitan P 800, Produkt der Fa. Münzing Chemie, Heilbronn ⁸⁾ erfindungsgemäßes Copolymer bzw. Vergleichsbeispiel | |

**Tabelle 8:**

| Vergleich der Eigenschaften der selbstverlaufenden zementären Spachtelmasse mit den erfindungsgemäßen Copolymeren und den Vergleichsbeispielen (Trockenmörtelmischung: 1.000 g; Wassermenge: 200 g) | | | | | | | | | |
|---|---|---|---|---|---|---|---|---|---|
| Zusatzmittel | Bluten | Segregation | Fließmaß | | | Selbstheilung | | | |
| | | | nach 8 min [cm] | nach 30 min [cm] | nach 45 min [cm] | nach 8 min | nach 15 min | nach 30 min | nach 45 min |
| Beispiel 1 | kein | kein | 12,0 | 11,5 | 8,7 | 3 | 4 | 6 | 6 |
| Beispiel 1 ¹⁾ | stark | stark | 15,7 | 15,4 | 12,9 | 2 | 2 | 3 | 5 |
| Beispiel 6 | kein | kein | 12,3 | 11,6 | 8,5 | 3 | 3 | 5 | 6 |
| Beispiel 6 ¹⁾ | stark | stark | 16,0 | 15,7 | 13,1 | 1 | 1 | 3 | 4 |
| Beispiel 8 | kein | kein | 15,4 | 15,0 | 14,6 | 1 | 1 | 2 | 2 |
| Beispiel 9 | kein | kein | 15,3 | 15,0 | 14,5 | 1 | 1 | 1 | 2 |
| Beispiel 10 | kein | kein | 15,4 | 15,1 | 14,6 | 1 | 1 | 1 | 2 |
| Beispiel 12 | kein | kein | 15,2 | 14,8 | 14,1 | 1 | 1 | 2 | 3 |
| | | | | | | | | | |
| Vergleichsbeispiel 1 | kein | kein | 11,0 | 10,3 | 9,2 | 3 | 4 | 6 | 6 |
| Vergleichsbeispiel 1 ¹⁾ | stark | stark | 15,8 | 15,3 | 12,8 | 2 | 2 | 3 | 4 |
| Vergleichsbeispiel 2 | kein | kein | 12,2 | 11,2 | 8,8 | 3 | 3 | 5 | 6 |
| Vergleichsbeispiel 2 ¹⁾ | stark | stark | 15,9 | 15,6 | 13,2 | 1 | 1 | 2 | 4 |

| | | | | | | | | | |
|---|---|---|---|---|---|---|---|---|---|
| ¹⁾ Dosierung 0,005 Gew.-% | | | | | | | | | |

Wie die Testergebnisse in Tabelle 8 zeigen, gewährleisten die erfindungsgemäßen Copolymere vom Typ C (Beispiele 8 bis 10 und 12) sehr gute Fließmaße über die Zeit und verhindern effektiv Bluten und Segregation. Weiterhin ist das Selbstheilungsvermögen nach 15 und 30 Minuten sehr gut und auch nach 45 Minuten noch gut. In der mit einem Polycarboxylatether-Fließmittel (Melflux 2651 F) verflüssigten selbstverlaufenden zementären Spachtelmasse wirken die erfindungsgemäßen Copolymere vom Typ C als hervorragende Stabilisierer und gewährleisten für den Anwender eine optimale Verarbeitbarkeit der Baustoffmischung.

Die erfindungsgemäßen Copolymere vom Typ C bewirken weiterhin keine Verzögerung hinsichtlich der Zementhydratation oder aber der Aushärtung. Ebenso ist kein negativer Einfluss auf die Festigkeitsentwicklung festzustellen.

Auch mit den Copolymeren vom Typ A (Beispiel 1) und B (Beispiel 6) sowie bei den Vergleichsbeispielen 1 und 2 tritt kein Bluten und keine Segregation auf, jedoch werden das Fließverhalten und die Selbstheilungseigenschaften insbesondere über die Zeit sehr stark eingeschränkt, was für den Anwender sehr nachteilig ist. Halbiert man die Dosierung dieser Polymere, so erhält man zwar ein sehr gutes Fließverhalten der selbstverlaufenden zementären Spachtelmasse, jedoch tritt starkes Bluten und Segregation auf, was ebenfalls für den Anwender sehr nachteilig ist.

### 4) Vergussmörtel:

Der zementäre Vergussmörtel wurde im Labor mit einem Mörtelmischer nach DIN EN 196-1 gemischt. Auch der Mischvorgang wurde wie in DIN EN 196-1 beschrieben durchgeführt. Die Mischzeit betrug 4 min. Die Fließmaße (= Durchmesser des Ausbreitkuchens in cm) wurden mit einem in DIN EN 196 Teil 3 beschriebenen Vicat-Ring (Innendurchmesser oben = 70 mm, Innendurchmesser unten = 80 mm, Höhe = 40 mm) auf einer ebenen, trockenen Glasplatte bestimmt. Die Fließmaßbestimmung wurde pro Mischung dreimal durchgeführt und zwar zu den Zeitpunkten t = 5, 30, 60 min (die Mischung wurde vor der Fließmaßbestimmung mit dem Löffel jeweils 60 Sekunden lang wieder aufgerührt).

Die Zusammensetzung des Vergussmörtels ist aus Tabelle 9 zu entnehmen.

**Tabelle 9**

| Zusammensetzung der Testmischung (in Gew.-%) | |
|---|---|
| Komponente | Menge |
| Portlandzement ¹⁾ | 30,75 |
| Normensand (0-2 mm) ²⁾ | 65,33 |
| EFA-Füller ³⁾ | 2,31 |
| CSA 20 ⁴⁾ | 1,37 |
| Zement/AL-Pulver (995/5) ⁵⁾ | 0,08 |
| Melflux 1641 F ⁶⁾ | 0,15 |
| Stabilisierer ⁷⁾ | 0,01 |

| | |
|---|---|
| ¹⁾ CEM I 52,5 R ²⁾ gemäß DIN EN 196-1 ³⁾ Produkt der Fa. Bau Mineral, Herten ⁴⁾ Calciumsulfoaluminat, Produkt der Fa. Denka, Japan ⁵⁾ Mischung aus 995 Gewichtsteilen CEM I 52,5 R und 5 Gewichtsteilen Al-Pulver (Standard SK I, Produkt der Fa. Eckart, Fürth) ⁶⁾ Produkt der Fa. Degussa Construction Polymers GmbH, Trostberg ⁷⁾ erfindungsgemäßes Copolymer bzw. Vergleichsbeispiel | |

**Tabelle 10:**

| Vergleich der Mörtel-Eigenschaften mit den erfindungsgemäßen Copolymeren und Vergleichsbeispielen. | | | | | |
|---|---|---|---|---|---|
| | | | | | |
| Vergussmörtel-Trockenmischung: 1.000 g | | | | | |
| Wassermenge: 100 g | | | | | |
| Zusatzmittel | Bluten | Segregation | Fließmaß | | |
| | | | nach 5 min [cm] | nach 30 min [cm] | nach 60 min [cm] |
| Beispiel 2 | kein | kein | 21,1 | 18,2 | 11,0 |
| Beispiel 2 ¹⁾ | stark | stark | 29,1 | 28,2 | 25,0 |
| Beispiel 4 | kein | kein | 20,2 | 17,3 | 10,2 |
| Beispiel 4 ¹⁾ | stark | stark | 28,2 | 27,3 | 25,7 |
| Beispiel 8 | kein | kein | 29,2 | 28,7 | 26,7 |
| Beispiel 9 | kein | kein | 29,5 | 29,0 | 27,3 |
| Beispiel 10 | kein | kein | 29,0 | 28,1 | 26,5 |
| Beispiel 11 | kein | kein | 29,4 | 29,0 | 28,1 |
| Beispiel 12 | kein | kein | 28,9 | 28,8 | 27,6 |
| | | | | | |
| Vergleichsbeispiel 1 | kein | kein | 22,1 | 17,8 | 14,3 |
| Vergleichsbeispiel 1 ¹⁾ | stark | stark | 29,1 | 27,4 | 26,4 |
| Vergleichsbeispiel 2 | kein | kein | 19,8 | 16,3 | 10,2 |
| Vergleichsbeispiel 2 ¹⁾ | stark | stark | 28,3 | 26,3 | 25,6 |
| Vergleich Celluloseether ²⁾ | kein | kein | 27,3 | 25,4 | 23,2 |

| | | | | | |
|---|---|---|---|---|---|
| ¹⁾ Dosierung 0,005 Gew.-% ²⁾ Dosierung 0,04 Gew.-% einer Tylose H 20 P2; Produkt der Fa. Clariant GmbH, Frankfurt | | | | | |

Die Testergebnisse in Tabelle 10 zeigen, dass die erfindungsgemäßen Copolymere vom Typ C (Beispiele 8 bis 12) sehr gute Fließmaße, auch über die Zeit, sowie eine effektive Verhinderung von Bluten und Segregation gewährleisten. Dies zeigt, dass die erfindungsgemäßen Copolymere vom Typ C hervorragend als Stabilisierer mit dem Polycarboxylatether-Fließmittel (Melflux 1641 F; Degussa Construction Polymers GmbH) zusammenwirken, um eine für den Anwender optimale Verarbeitbarkeit des Vergussmörtels zu gewährleisten. Mit den erfindungsgemäßen Copolymeren vom Typ C (Beispiele 8 bis 12) ist die Verarbeitbarkeit sogar besser als mit einem handelsüblichen Stabilisierer (Vergleich Celluloseether), da höhere Fließmaße über die Zeit erhalten werden, ohne dass Bluten und Segregation auftreten.

Auch mit den Copolymeren vom Typ A (Beispiel 2) und B (Beispiel 4) sowie bei den Vergleichsbeispielen 1 und 2 tritt kein Bluten und Segregation auf, jedoch wird das Fließverhalten sehr stark eingeschränkt, was für den Anwender sehr nachteilig ist. Halbiert man die Dosierung dieser Polymere, so erhält man zwar ein sehr gutes Fließverhalten des Vergussmörtels, jedoch tritt starkes Bluten und Segregation auf, was ebenfalls für den Anwender sehr nachteilig ist.

### 5) Selbstverdichtender Beton:

Die Selbstverdichtenden Betone wurden im Labor mit einem 50 Liter Zwangsmischer gemischt. Der Wirkungsgrad des Mischers lag bei 45 %. Beim Mischvorgang wurden zunächst Zuschläge und mehlfeine Stoffe 10 Sekunden im Mischer homogenisiert, bevor anschließend das Anmachwasser, das Fließmittel und der Stabilisierer (als wässrige Lösung bzw. als Pulver) zugegeben wurden. Die Mischzeit betrug 4 Minuten. Im Anschluss wurde die Frischbetonprüfung (Setzfließmaß) durchgeführt und bewertet. Der Konsistenzverlauf wurde über 120 Minuten beobachtet.

### Bestimmung der Setzfließmaße

Zur Bestimmung der Fließfähigkeit wurde ein sog. Abrams-Cone Setztrichter (Innendurchmesser oben 100 mm, Innendurchmesser unten 200 mm, Höhe 300 mm) verwendet (Setzfließmaß = über zwei senkrecht zueinander stehende Achsen gemessener und gemittelter Durchmesser des Betonkuchens in cm). Die Bestimmung des Setzfließmaßes wurde pro Mischung viermal durchgeführt, und zwar zu den Zeitpunkten t = 0, 30, 60 und 90 Minuten nach Mischende, wobei die Mischung vor der jeweiligen Fließmaßbestimmung mit dem Betonmischer 60 Sekunden lang wieder durchgemischt wurde.

### Beurteilung von Bluten und Segregation

Bluten und Segregation der Mischungen wurden visuell beurteilt.

Die Zusammensetzung des Selbstverdichtenden Betons ist aus Tabelle 11 zu entnehmen.

**Tabelle 11**

| Zusammensetzung der Testmischung in kg/m³; Wassergehalt 160 kg/m³. | |
|---|---|
| Komponente | Menge |
| Portlandzement ¹⁾ | 290 |
| Sand (0-2 mm) | 814 |
| Kies (2-8 mm) | 343 |
| Kies (8-16 mm) | 517 |
| Flugasche | 215 |
| Melflux 2453 L ²⁾ | 3,3 |
| Stabilisierer ³⁾ | 53,9 |

| | |
|---|---|
| ¹⁾ CEM I 42, 5 R ²⁾ Produkt der Fa. Degussa Construction Polymers GmbH, Trostberg ³⁾ Erfindungsgemäßes Copolymer bzw. Vergleichsbeispiel Die Zugabe erfolgte als 1 M.-%ige wässrige Lösung (der Wassergehalt des Stabilisierers wird von der Gesamtmenge des Anmachwassers abgezogen) | |

**Tabelle 12:**

| Vergleich der Eigenschaften des Selbstverdichtenden Betons mit den erfindungsgemäßen Copolymeren und den Vergleichsbeispielen | | | | | | | | | |
|---|---|---|---|---|---|---|---|---|---|
| Zusatzmittel | Bluten | Segregation | Setzfließmaß nach 0 min | Setzfließmaß nach 30 min | Setzfließmaß nach 60 min | Setzfließmaß nach 90 min | Druckfestigkeit nach 1 Tag | Druckfestigkeit nach 7 Tagen | Druckfestigkeit nach 28 Tagen |
| ohne Stabilisierer (Vergleich) | stark | stark | 77 | 75 | 74 | 71 | 2,1 N/mm² | 35,6 N/mm² | 55,7 N/mm² |
| | | | | | | | | | |
| Beispiel 1 | kein | kein | 61 cm | 58 cm | 55 cm | 52 cm | 13 N/mm² | 40 N/mm² | 57 N/mm² |
| Beispiel 4 | kein | kein | 63 cm | 60 cm | 57 cm | 55 cm | 14 N/mm² | 41 mm² | 58 N/mm² |
| Beispiel 10 | kein | kein | 74 cm | 72 cm | 72 cm | 71 cm | 16 N/mm² | 46 N/mm² | 64 N/mm² |
| Beispiel 12 | kein | kein | 73 cm | 72 cm | 71 cm | 70 cm | 15 N/mm² | 47 N/mm² | 62 N/mm² |
| | | | | | | | | | |
| Vergleichsbeispiel 1 | mittel | mittel | 74 cm | 71 cm | 70 cm | 69 cm | 12 N/mm² | 41 N/mm² | 57 N/mm² |

Wie aus den Testergebnissen in Tabelle 12 ersichtlich, gewährleisten die erfindungsgemäßen Copolymere vom Typ C (Beispiele 10 und 12) sehr gute Setzfließmaße, auch über die Zeit, sowie eine effektive Verhinderung von Bluten und Segregation. Dies zeigt, dass die erfindungsgemäßen Copolymere vom Typ C auch im selbstverdichtenden Beton hervorragend als Stabilisierer geeignet sind und für den Anwender eine optimale Verarbeitbarkeit des Frischbetons gewährleisten. Ebenso ist kein negativer Einfluss auf die Festigkeitsentwicklung festzustellen.

Die erfindungsgemäßen Copolymere vom Typ A (Beispiel 1) und Typ B (Beispiel 4) verhindern zwar ebenfalls sehr effektiv das Auftreten von Bluten und Segregation, jedoch wird die Fließfähigkeit des Betons zu stark eingeschränkt, was sich negativ auf die Verarbeitbarkeit auswirkt.

Dagegen tritt bei Verwendung des Vergleichsbeispiels mittleres Bluten und Segregation auf, was sich negativ auf die Homogenität des Frischbetons und somit auch auf die Festigkeiten des Betons auswirkt.

## Patentansprüche

1. Wasserlösliche sulfogruppenhaltige Copolymere bestehend aus
a) 3 bis 96 Mol-% der Formel (I) 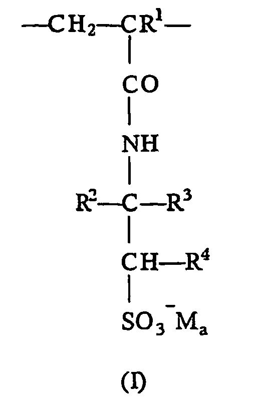 mit
R¹ = Wasserstoff oder Methyl,
R², R³, R⁴ = Wasserstoff, aliphatischer Kohlenwasserstoffrest mit 1 bis 6 C-Atomen, ggf. mit Methylgruppen substituierter Phenylrest und
M = Wasserstoff, ein- oder zweiwertiges Metallkation, unsubstituiertes oder mit organischen Resten substituiertes Ammoniumion sowie
a = ½ oder 1,
und
b) 3 bis 96 Mol-% der Formel (II) 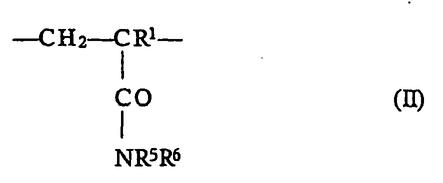 worin
R¹ die oben genannte Bedeutung besitzt,
R⁵ und R⁶ unabhängig voneinander für Wasserstoff, einen aliphatischen Kohlenwasserstoffrest mit 1 bis 20 C-Atomen, einen cycloaliphatischen Kohlenwasserstoffrest mit 5 bis 8 C-Atomen oder einen Arylrest mit 6 bis 14 C-Atomen stehen,
sowie des Weiteren
c) 0,01 bis 10 Mol-% der Baugruppen der Formel (III) 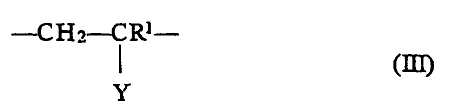 worin
Y = -COO(CₙH₂ₙO)ₚ-R⁷, -(CH₂)_{q}-O(CₙH₂ₙO)ₚ-R⁷,
R⁷ = 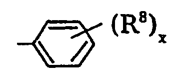 sowie ungesättigter oder gesättigter, linearer oder verzweigter aliphatischer Alkylrest mit 10 bis 40 C-Atomen,
R⁸ = H, C₁- bis C₆-Alkyl-, Arylalkylgruppe mit C₁- bis C₁₂- Alkyl- und C₆- bis C₁₄-Arylrest,
n = 2 bis 4,
p = 0 bis 200,
q = 0 bis 20,
x = 0 bis 3 darstellen und
R¹ die oben genannte Bedeutung besitzt,
und/oder
d) 0,1 bis 30 Mol-% der Baugruppen der Formel (IV) 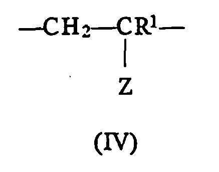 worin
Z = -(CH₂)_{q}-O(CₙH₂ₙO)ₚ-R⁹.
R⁹ = H, C₁- bis C₄-Albyl darstellen und
R¹, n, p und q die oben genannte Bedeutung besitzen.

2. Copolymere nach Anspruch 1, **dadurch gekennzeichnet, dass** das ein- oder zweiwertige Metallkation aus Natrium-, Kalium-, Calcium- oder Magnesiumionen besteht.

3. Copolymere nach Anspruch 1 oder 2, **dadurch gekennzeichnet, dass** sich die mit organischen Resten substituierten Ammoniumionen vorzugsweise von primären, sekundären und tertiären C₁- bis C₂₀-Alkylaminen, C₁- bis C₂₀-Alkanolaminen, C₅- bis C₈-Cycloalkylaminen und C₆- bis C₁₄-Arylaminen ableiten.

4. Copolymere nach einem der Ansprüche 1 bis 3, **dadurch gekennzeichnet, dass** sie aus 30 bis 80 Mol-% der Baugruppe a), 5 bis 50 Mol-% der Baugruppe b), 0,1 bis 5 Mol-% der Baugruppe c) und/oder 0,2 bis 15 Mol-% der Baugruppe d) bestehen.

5. Copolymere nach einem der Ansprüche 1 bis 4, **dadurch gekennzeichnet, dass** sie ein zahlenmittleres Molekulargewicht von 50.000 bis 20.000.000 g/Mol besitzen.

6. Copolymere nach einem der Ansprüche 1 bis 5, **dadurch gekennzeichnet, dass** die Verbindungen bestehend aus den Baugruppen a), b), c) und d) oder a), b) und d) noch bis zu 50 Mol-%, insbesondere bis zu 20 Mol-%, bezogen auf die Mol-%-Summen der Baugruppen a), b), c) und d), einer weiteren Baugruppe e) auf Basis der Formel (V) enthalten 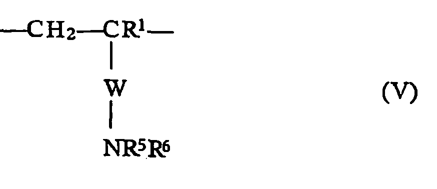 worin
W = -CO-O-(CH₂)ₘ-, -CO-NR²-(CH₂)ₘ-
m = 1 bis 6 darstellen und
R¹, R², R⁵ und R⁶ die oben genannte Bedeutung besitzen.

7. Copolymere nach einem der Ansprüche 1 bis 6, **dadurch gekennzeichnet, dass** bis zu 50 % der Baugruppe a) durch den Baustein f) gemäß Formel (VI) abgeleitet von sulfonsäurehaltigen Betainmonomeren ersetzt ist 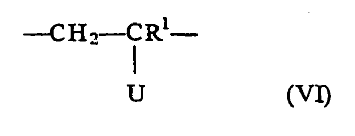 worin
U = 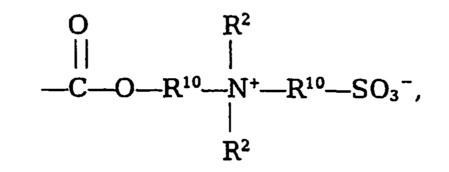 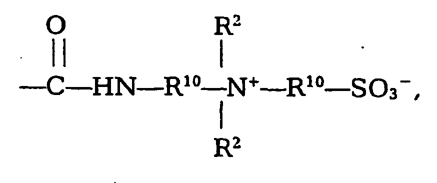 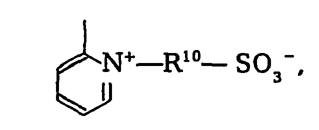
R¹⁰ = 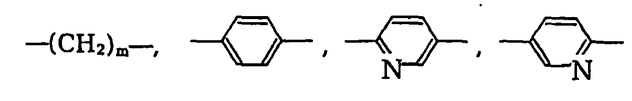
darstellen sowie
R¹, R² und m die oben genannte Bedeutung besitzen.

8. Copolymere nach einem der Ansprüche 1 bis 7, **dadurch gekennzeichnet, dass** sie noch bis zu 0,1 Mol-%, bezogen auf die Summen der Baugruppen a), b), c), d), e) und f), einer Vernetzer-Komponente ausgewählt aus der Gruppe Triallylamin, Triallylmethylammoniumchlorid, Tetraallylammoniumchlorid, N,N'-Methylenbisacrylamid, Triethylenglykolbismethacrylat, Triethylenglykolbisacrylat, Polyethylenglykol(400)-bismethacrylat und Polyethylenglykol(400)-bisacrylat enthalten.

9. Verfahren zur Herstellung der Copolymere nach den Ansprüchen 1 bis 8, **dadurch gekennzeichnet, dass** die Strukturen a) bis d) sowie ggf. e) und f) bildende Monomere durch radikalische, ionische oder komplex koordinative Substanz-, Lösungs-, Gel-, Emulsions-, Dispersions- oder Suspensionspolymerisation umgesetzt werden.

10. Verfahren nach Anspruch 9, **dadurch gekennzeichnet, dass** die Copolymere durch Gelpolymerisation in wässriger Phase in Gegenwart von Initiatoren und ggf. sonstigen Hilfsmitteln, wie z. B. Molekulargewichtsreglern, hergestellt werden.

11. Verfahren nach Anspruch 10, **dadurch gekennzeichnet, dass** die Gelpolymerisation bei - 5 bis 50 °C und einer Konzentration der wässrigen Lösung von 35 bis 70 Gew.-% erfolgt.

12. Verwendung der Copolymere nach den Ansprüchen 1 bis 8 als Zusatzmittel in wässrigen Baustoffsystemen auf der Basis hydraulischer Bindemittel wie Zement, Kalk, Gips und Anhydrit sowie in wasserbasierenden Anstrich- und Beschichtungssystemen.

13. Verwendung nach Anspruch 12, **dadurch gekennzeichnet, dass** die Copolymere als Wasserretentionsmittel, Stabilisierer und Rheologiemodifizierer eingesetzt werden.

14. Verwendung nach Anspruch 12, **dadurch gekennzeichnet, dass** die Copolymere in einer Menge von 0,001 bis 5 Gew.-%, bezogen auf das Trockengewicht des Baustoff-, Anstrich- oder Beschichtungssystems, eingesetzt werden.

## Claims

1. Water-soluble sulpho group-containing copolymers consisting of
a) 3 to 96 mol% of the formula (I) 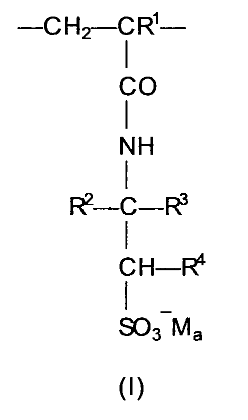 where
R¹ = hydrogen or methyl,
R², R³, R⁴ = hydrogen, an aliphatic hydrocarbon radical having 1 to 6 C atoms, a phenyl radical optionally substituted by methyl groups and
M = hydrogen, a mono- or divalent metal cation, an ammonium ion which is unsubstituted or substituted by organic radicals, and
a = ½ or 1,
and
b) 3 to 96 mol% of the formula (II) 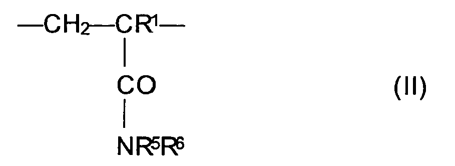 in which
R¹ has the abovementioned meaning,
R⁵ and R⁶ independently of one another represent hydrogen, an aliphatic hydrocarbon radical having 1 to 20 C atoms, a cycloaliphatic hydrocarbon radical having 5 to 8 C atoms or an aryl radical having 6 to 14 C-atoms,
and furthermore
c) 0.01 to 10 mol% of the structural groups of the formula (III) 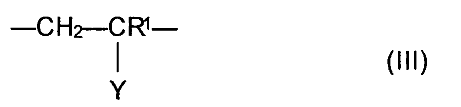 in which
Y = -COO(CₙH₂ₙO)ₚ-R⁷, -(CH₂)_{q}-O(CₙH₂ₙO)ₚ-R⁷, R⁷ = 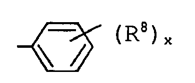 and an unsaturated or saturated, linear or branched aliphatic alkyl radical having 10 to 40 C-atoms,
R⁸ = H, a C₁- to C₆-alkyl group, an arylalkyl group having a C₁- to C₁₂- alkyl and C₆- to C₁₄-aryl radical,
n = 2 to 4,
p = 0 to 200,
q = 0 to 20,
x = 0 to 3 and
R¹ has the abovementioned meaning,
and/or
d) 0.1 to 30 mol% of the structural groups of the formula (IV) 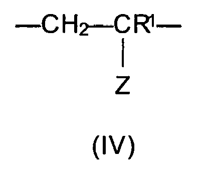 in which
Z = -(CH₂)_{q}-O(CₙH₂ₙO)ₚ-R⁹,
R⁹ = H, C₁- to C₄-alkyl and
R¹, n, p and q have the abovementioned meaning.

2. Copolymers according to Claim 1, **characterized in that** the mono- or divalent metal cation consists of sodium, potassium, calcium or magnesium ions.

3. Copolymers according to Claim 1 or 2, **characterized in that** the ammonium ions substituted by organic radicals are preferably derived from primary, secondary and tertiary C₁- to C₂₀-alkylamines, C₁- to C₂₀-alkanolamines, C₅- to C₈-cycloalkylamines and C₆- to C₁₄-arylamines.

4. Copolymers according to one of Claims 1 to 3, **characterized in that** they consist of 30 to 80 mol% of the structural group a), 5 to 50 mol% of the structural group b), 0.1 to 5 mol% of the structural group c) and/or 0.2 to 15 mol% of the structural group d).

5. Copolymers according to one of Claims 1 to 4, **characterized in that** they have a number average molecular weight of 50 000 to 20 000 000 g/mol.

6. Copolymers according to one of Claims 1 to 5, **characterized in that** the compounds consisting of the structural groups a), b), c) and d) or a), b) and d) additionally contain up to 50 mol%, in particular up to 20 mol%, based on the mol% sums of the structural groups a), b), c) and d), of a further structural group e) based on the formula (V) 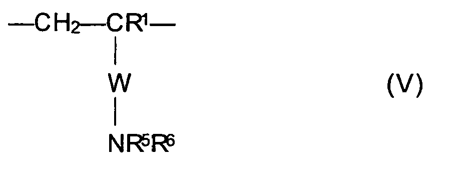 in which
W = -CO-O-(CH₂)ₘ-, -CO-NR²-(CH₂)ₘ-
m = 1 to 6 and
R¹, R², R⁵ and R⁶ have the abovementioned meaning.

7. Copolymers according to one of Claims 1 to 6, **characterized in that** up to 50% of the structural group a) is replaced by the structural unit f) in accordance with formula (VI) derived from sulphonic acid-containing betaine monomers 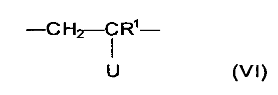 in which
U = 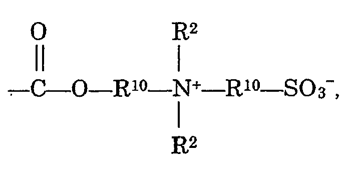 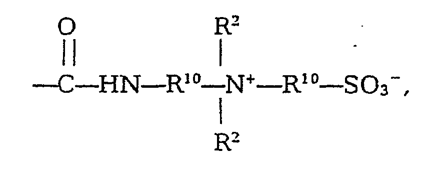 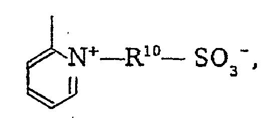
R¹⁰ = 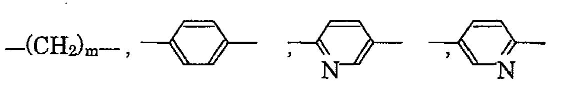
and
R¹, R² and m have the abovementioned meaning.

8. Copolymers according to one of Claims 1 to 7, **characterized in that** they additionally contain up to 0.1 mol%, based on the sums of the structural groups a), b), c), d), e) and f), of a crosslinker component selected from the group triallylamine, triallylmethylammonium chloride, tetraallylammonium chloride, N,N'-methylenebisacrylamide, triethylene glycol bismethacrylate, triethylene glycol bisacrylate, polyethylene glycol(400) bismethacrylate and polyethylene glycol(400) bisacrylate.

9. Process for the preparation of the copolymers according to Claims 1 to 8, **characterized in that** the monomers forming structures a) to d) and optionally e) and f) are reacted by free-radical, ionic or complex coordinative substance, solution, gel, emulsion, dispersion or suspension polymerization.

10. Process according to Claim 9, **characterized in that** the copolymers are prepared by gel polymerization in aqueous phase in the presence of initiators and optionally other auxiliaries, such as, for example, molecular weight regulators.

11. Process according to Claim 10, **characterized in that** the gel polymerization is carried out at - 5 to 50 °C and a concentration of the aqueous solution of 35 to 70% by weight.

12. Use of the copolymers according to Claims 1 to 8 as additives in aqueous construction material systems based on hydraulic binders such as cement, lime, gypsum and anhydrite and in water-based painting and coating systems.

13. Use according to Claim 12, **characterized in that** the copolymers are employed as water retention agents, stabilizers and rheology modifiers.

14. Use according to Claim 12, **characterized in that** the copolymers are employed in an amount of from 0.001 to 5% by weight, based on the dry weight of the construction material, painting or coating system.

## Revendications

1. Copolymères solubles dans l'eau, contenant des groupes sulfo, constitués par
a) 3 à 96% en mole de formule (I) 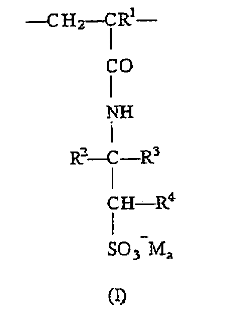 avec
R¹ = hydrogène ou méthyle,
R², R³, R⁴ = hydrogène, un radical hydrocarboné aliphatique comprenant 1 à 6 atomes de carbone, un radical phényle le cas échéant substitué par des groupes méthyle et
M = hydrogène, un cation métallique monovalent ou divalent, un ion d'ammonium non substitué ou substitué par des radicaux organiques ainsi que
a = 1/2 ou 1,
et
b) 3 à 96% en mole de formule (II) 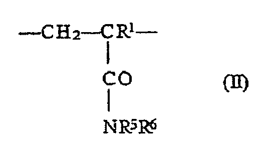 où
R¹ présente la signification susmentionnée,
R⁵ et R⁶ représentent, indépendamment l'un de l'autre, hydrogène, un radical hydrocarboné aliphatique comprenant 1 à 20 atomes de carbone, un radical hydrocarboné cycloaliphatique comprenant 5 à 8 atomes de carbone ou un radical aryle comprenant 6 à 14 atomes de carbone,
ainsi qu'en outre
c) 0,01 à 10% en mole de groupes constitutifs de formule (III) 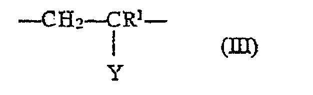 où
Y = -COO(CₙH₂ₙO)ₚ-R⁷, -(CH₂)_{q}-O(CₙH₂ₙO)ₚ-R⁷, R⁷ = 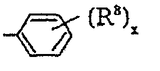 ainsi qu'un radical alkyle aliphatique, insaturé ou saturé, linéaire ou ramifié comprenant 10 à 40 atomes de carbone,
R⁸ = H, un groupe C₁-C₆-alkyle, un groupe arylalkyle avec un radical C₁-C₁₂-alkyle et un radical C₆-C₁₄-aryle,
n = 2 à 4,
p = 0 à 200,
q = 0 à 20,
x = 0 à 3
R¹ présente la signification susmentionnée,
et/ou
d) 0,1 à 30% en mole de groupes constitutifs de formule (IV) 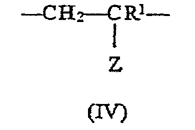 où
Z = -(CH₂)_{q}-O(CₙH₂ₙO)ₚ-R⁹,
R⁹ = H, C₁-C₄-alkyle et
R¹, n, p et q présentent la signification susmentionnée.

2. Copolymères selon la revendication 1, **caractérisés en ce que** le cation métallique monovalent ou divalent est constitué par des ions de sodium, de potassium, de calcium ou de magnésium.

3. Copolymères selon la revendication 1 ou 2, **caractérisés en ce que** les ions d'ammonium substitués par des radicaux organiques sont de préférence dérivés de C₁-C₂₀-alkylamines, de C₁-C₂₀-alcanolamines, de C₅-C₈-cycloalkylamines et de C₆-C₁₄-arylamines primaires, secondaires et tertiaires.

4. Copolymères selon l'une quelconque des revendications 1 à 3, **caractérisés en ce qu'**ils sont constitués par 30 à 80% en mole du groupe constitutif a), 5 à 50% en mole du groupe constitutif b), 0,1 à 5% en mole du groupe constitutif c) et/ou 0,2 à 15% en mole du groupe constitutif d).

5. Copolymères selon l'une quelconque des revendications 1 à 4, **caractérisés en ce qu'**ils présentent un poids moléculaire numérique moyen de 50 000 à 20 000 000 g/mole.

6. Copolymères selon l'une quelconque des revendications 1 à 5, **caractérisés en ce que** les composés constitués par les groupes constitutifs a), b), c) et d) ou a), b) et d) contiennent encore jusqu'à 50% en mole, en particulier jusqu'à 20% en mole, par rapport à la somme des % en mole des groupes constitutifs a), b), c) et d), d'un autre groupe constitutif e) à base de la formule 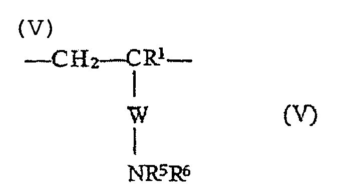 où
W = -CO-O-(CH₂)ₘ-, -CO-NR²-(CH₂)ₘ-
m = 1 à 6
R¹, R², R⁵ et R⁶ présentent la signification susmentionnée.

7. Copolymères selon l'une quelconque des revendications 1 à 6, **caractérisés en ce que** jusqu'à 50% du groupe constitutif a) est remplacé par l'élément constitutif f) selon la formule (VI), dérivé de monomères bétaïniques contenant de l'acide sulfonique 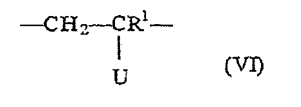
U = 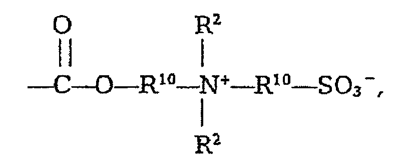 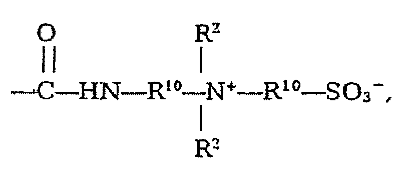 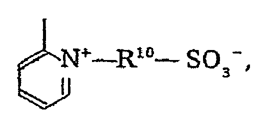
R¹⁰ = 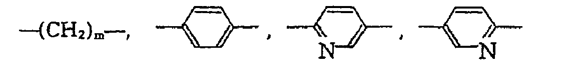
ainsi que
R¹, R² et m présentent la signification susmentionnée.

8. Copolymères selon l'une quelconque des revendications 1 à 7, **caractérisés en ce qu'**ils contiennent encore jusqu'à 0,1% en mole, par rapport aux sommes des groupes constitutifs a), b), c), d), e) et f), d'un composant réticulant choisi dans le groupe formé par la triallylamine, le chlorure de triallylméthylammonium, le chlorure de tétraallylammonium, le N,N'-méthylènebisacrylamide, le bis-méthacrylate de triéthylèneglycol, le bis-acrylate de triéthylèneglycol, le bis-méthacrylate de polyéthylèneglycol(400) et le bis-acrylate de polyéthylèneglycol(400).

9. Procédé pour la préparation des copolymères selon les revendications 1 à 8, **caractérisé en ce que** les monomères formant les structures a) à d) ainsi que le cas échéant e) et f) sont transformés par polymérisation radicalaire, ionique ou de coordination complexe en masse, en solution, en gel, en émulsion, en dispersion ou en suspension.

10. Procédé selon la revendication 9, **caractérisé en ce que** les copolymères sont préparés par polymérisation en gel en phase aqueuse en présence d'initiateurs ainsi que le cas échéant d'autres adjuvants, tels que par exemple les agents de régulation des poids moléculaires.

11. Procédé selon la revendication 10, **caractérisé en ce que** la polymérisation en gel est réalisée à -5 jusqu'à 50°C et à une concentration de la phase aqueuse de 35 à 70% en poids.

12. Utilisation des copolymères selon les revendications 1 à 8 comme additif dans des systèmes de matériaux de construction aqueux à base de liants hydrauliques tels que le ciment, le calcaire, le plâtre et l'anhydrite ainsi que dans des systèmes de peinture et de revêtement à base d'eau.

13. Utilisation selon la revendication 12, **caractérisée en ce que** les copolymères sont utilisés comme agents de rétention d'eau, stabilisants et agents de modification de la rhéologie.

14. Utilisation selon la revendication 12, **caractérisée en ce que** les copolymères sont utilisés en une quantité de 0,001 à 5% en poids, par rapport au poids sec du système de matériau de construction, de peinture ou de revêtement.
